# EUROPÄISCHE PATENTSCHRIFT

(11) **EP 3 357 680 B1**
(45) Veröffentlichungstag und Bekanntmachung des Hinweises auf die Patenterteilung: **13.04.2022**
(21) Anmeldenummer: 17154655.9
(22) Anmeldetag: 03.02.2017
(51) Int. Cl.: B32B 3/12, B32B 15/01, E04F 13/08, E04F 13/12, E21D 11/00

(54) **TUNNELAUSKLEIDUNG**
TUNNEL LINING
REVÊTEMENT DE TUNNEL

(43) Veröffentlichungstag der Anmeldung: 08.08.2018
(73) Patentinhaber: Senova Kunststoffe GmbH & Co. KG, 5723 Uttendorf (AT)
(72) Erfinder: Straif, Johann, 6364 Brixen im Thale (AT); Klepsch, Wilhelm, 5710 Kaprun (AT)
(74) Vertreter: Schwarz & Partner Patentanwälte GmbH

(56) Entgegenhaltungen:
- EP-A1- 0 845 579
- CN-A- 1 302 727
- CN-Y- 2 595 920
- JP-A- H10 121 896
- JP-A- S58 216 758
- JP-A- 2000 280 089
- US-A- 5 510 597

## Beschreibung

Die vorliegende Erfindung betrifft eine Tunnelauskleidung, die Verwendung einer Verbundplatte zur Auskleidung eines Tunnels sowie ein Verfahren zur Auskleidung eines Tunnels.

Beim Bau von Tunneln wird nach Stand der Technik die Tunnellaibung mit Beton ausgekleidet. Bei Tunneln in Lagen mit alpinem Klima werden sowohl in der Sommerzeit, beispielsweise durch Regen, als auch in der Winterzeit, beispielsweise durch Schnee, große Mengen an Feuchtigkeit in den Tunnel eingetragen. Obwohl die Tunnellaibung keinen direkten Kontakt mit Schnee oder Regen hat, wird Nässe durch Kraftfahrzeuge und deren Räder aufgewirbelt, im Tunnel verteilt und kommt schlussendlich in direkten Kontakt mit der Oberfläche der Tunnelauskleidung.

Durch die Verwirbelung der Feuchtigkeit in Verbindung mit auf dem Straßenbelag befindlichem Schmutz wird die Tunnelauskleidung stark verunreinigt. Der zusätzliche Einsatz von Streusalz oder Chemikalien zur Vorbeugung gegen Eisbildung führt zu chemisch aggressiven Mischungen, welche die Oberfläche der Tunnelauskleidung außerdem beschädigen. Wenngleich Beton gegen derartige Angriffe sehr beständig ist, wird die Betonoberfläche durch aggressive Mischungen aus Streusalz, Chemikalien, Feuchtigkeit und Schmutz im Laufe der Zeit verändert, was in weiterer Folge auch die Stahlarmierung im Beton angreifen kann. Durch die im Tunnel vorhandene hohe Konzentration an CO₂ kann es zur Carbonatisierung des Betons kommen. Eine solche wäre aus Stabilitätsgründen nicht negativ anzusehen. Allerdings wird carbonatisierter Beton an der Oberfläche spröde, was dazu führt, dass nicht nur die Verschmutzung sondern auch Wasser tiefer eindringen kann. Dringt Wasser bis zur Stahlarmierung vor, können durch Korrosion des Stahls Spannungen im Beton entstehen, die im allerschlimmsten Fall zum Abplatzen des Betons führen können.

Man ist daher dazu übergegangen, die Betonoberfläche mit Farbanstrichen zu versehen, welche einerseits die Reflexionseigenschaften verbessern und andererseits die Reinigung der Oberfläche durch hydrophobe Zusätze vereinfachen.

Dennoch unterliegen auch solche Oberflächen immer noch einem Schädigungsprozess durch die oben geschilderten chemischen Vorgänge, der sich verlangsamen nicht aber vollständig aufhalten lässt. Je nach Verkehrsaufkommen und klimatischer Lage muss die Betonoberfläche nach 10 bis 20 Jahren einer kompletten Erneuerung unterzogen werden. Diese Erneuerung ist mit hohen Kosten und Ausfallszeiten des Tunnels verbunden. Alternative Lösungen wie in EP 0 845 579 beschrieben, sehen Kunststoffauskleidungen des Tunnels vor, die allerdings nicht die gewünschten Standzeiten aufweisen. Die im Tunnel auftretenden Temperaturschwankungen verursachen bei Kunststoffauskleidungen eine rasche Materialermüdung.

JP H10 121896 A offenbart eine Tunnelauskleidung, mit einer Verbundplatte aus Aluminium, die eine obere Decklage, eine untere metallische Decklage und eine dazwischen angeordnete Hohlkammerplatte umfasst.

Es besteht daher ein Bedarf, die Intervalle zwischen den Erneuerungen der Betonauskleidung in einem Tunnel zu erhöhen.

Aufgabe der vorliegenden Erfindung ist es daher, das Intervall zwischen zwei Erneuerungen der Betonauskleidung eines Tunnels zu vergrößern.

Gelöst wird diese Aufgabe durch eine Tunnelauskleidung nach Anspruch 1, gekennzeichnet durch eine Verbundplatte aufweisend
(i) eine obere metallische Decklage, umfassend Aluminium,
(ii) eine untere metallische Decklage, umfassend Aluminium und
(iii) eine dazwischen angeordnete metallische Hohlkammerplatte, umfassend

Aluminium, dadurch gekennzeichnet, dass die obere Decklage eine hydrophobe Beschichtung mit einem fluorierten Polymer, vorzugsweise PVDF, aufweist.

Weiters wird die Aufgabe gemäß Anspruch 10 gelöst durch die Verwendung einer solchen Verbundplatte, zur Auskleidung eines Tunnels.

Schließlich wird die Aufgabe gemäß Anspruch gelöst durch ein Verfahren zur Auskleidung eines mit Beton ummantelten Tunnels, wobei mehrere Befestigungsanker auf der Betonoberfläche einer Tunnellaibung eingebracht und die erfindungsgemäße Verbundplatte an den Befestigungsankern befestigt werden.

Es hat sich gezeigt, dass die Verwendung einer solchen Verbundplatte zur Auskleidung eines Tunnels den Zeitraum zwischen der Herstellung und der Erneuerung einer Betonauskleidung im Tunnel um etliche Jahre verzögern kann. Durch das Aufbringen der Verbundplatte wird einerseits die bestehende Betonauskleidung von den aggressiven Gemischen, die im Tunnel entstehen, abgeschirmt, sodass die Betonauskleidung beinahe unversehrt bleibt und nur im Bereich von Leckagen einer Belastung unterliegt. Andererseits hat die Verbundplatte den großen Vorteil, dass sie leicht gereinigt werden kann. So kann sie bei entsprechender farblicher Gestaltung der Oberfläche mit einem hohen Reflexionsgrad auch die Verkehrssicherheit im Tunnel erhöhen.

Bislang hat man im Tunnelbau Betonauskleidungen aus Metallen vermieden. Kostengünstige Metallverkleidungen unterliegen der Korrosion und inerte Metalle sind meist zu teuer, sodass eine Metallverkleidung vom Fachmann nicht in Erwägung gezogen wird. Außerdem weisen Metallverkleidungen eine hohe Masse auf, was die Verankerung an der Tunnellaibung erschwert und ein Sicherheitsrisiko darstellen kann, falls sich die Verankerung lösen sollte. Weiters ist bekannt, dass die Unterschiede in den Längenausdehnungskoeffizienten von Metallen und Beton eine Auskleidung nicht zulassen, da gerade in Tunneln häufig ein Wechsel zwischen kalten und warmen Temperaturen stattfindet und große Temperaturgradienten zwischen Tunnelinnerem, Erdreich und Auskleidung auftreten können.

Durch den speziellen Aufbau der Verbundplatte konnten die beschriebenen Probleme gelöst werden. Insgesamt ist es daher überraschend, dass eine Verbundplatte - wie oben beschrieben - als Tunnelauskleidung all diese Probleme umgeht, wohingegen man der Meinung war, dass Metallauskleidungen oder Verbundauskleidungen ungeeignet sind. Die gegenständliche Erfindung unterliegt nämlich nicht der raschen Materialermüdung durch den Wechsel von Wärme und Kälte wie Kunststoffverbundauskleidungen und sie ist darüber hinaus auch - im Unterschied zu Kunststoffverbundplatten - äußerst brandsicher.

In einer bevorzugten Ausführungsvariante ist vorgesehen, dass die Hohlkammerplatte als Honigwabenpaneel ausgebildet ist. Ein Honigwabenpaneel weist - wie der Name besagt - Kammern mit regelmäßigen, nebeneinander angeordneten regelmäßigen sechseckigen Zylindern auf, d.h. die Seitenkanten schließen jeweils einen Winkel von 120° miteinander ein. Die Seitenkantenlängen betragen bevorzugt zwischen 2 und 6 mm, da so eine besonders hohe Stabilität erzielt werden kann. Die Dicke der Kammerwände beträgt bevorzugt zwischen 40 und 60 µm.

Die obere Decklage und die untere Decklage weisen bevorzugt eine Stärke von 0,7 mm bis 1,2 mm, vorzugsweise rund 1 mm auf.

Die obere metallische Decklage, umfassend Aluminium und/oder die untere metallische Decklage, umfassend Aluminium und/oder die dazwischen angeordnete metallische Hohlkammerplatte, umfassend Aluminium, können aus Aluminium bestehen, wobei allerdings vorteilhaft ist, wenn die metallischen Komponenten aluminiumhältige Legierungen sind. Auch können die einzelnen Lagen aus demselben Metall bestehen. Bevorzugt ist allerdings, dass die Lagen aus unterschiedlichen Metallen bestehen. Beispielsweise kann die metallische Hohlkammerplatte eine Aluminiumlegierung mit über 90, vorzugsweise über 94 Gew.% AI umfassen. Ein Beispiel wäre die Legierung EN AW-3005 gemäß DIN EN 573-3:2009. Die Decklagen können zum Beispiel eine Aluminiumlegierung mit über 90, vorzugsweise über 94 Gew.% AI umfassen. Ein Beispiel wäre die Legierung EN AW-5754 gemäß DIN EN 573-3:2009. Ein weiteres Beispiel wäre die Legierung EN AW-5005 gemäß DIN EN 573-3:2009.

Die drei Lagen sind miteinander verklebt. Der eingesetzte Klebstoff ist bevorzugt ein nichtbrennbarer Klebstoff, um die Brandsicherheit zu erhöhen.

Die Passivierung von Aluminium führt einerseits dazu, dass der Korrosionsprozess deutlich verlangsamt ist, andererseits wird die Oberfläche spröder und dadurch schmutzempfindlicher. Die Erfindung sieht daher die Beschichtung an der Decklage vor, wodurch die metallischen Lagen weniger verschmutzen sowie leichter zu reinigen sind und weniger leicht zerkratzen.

Weiters kann auch vorgesehen sein, dass die untere Decklage eine Beschichtung aufweist.

Eine Beschichtung schützt die Aluminiumlagen noch besser, gewährleistet eine leichtere Reinigung und kann außerdem zur optischen Gestaltung verwendet werden. Es wäre z.B. eine hydrophobe Beschichtung denkbar, d.h. eine Beschichtung, die hydrophober als Aluminium oder die Decklage ist. Eine solche Beschichtung könnte beispielsweise eine Lackschicht mit hydrophoben Bestandteilen sein.

Eine derartige Beschichtung kann außerdem brandhemmende bzw. brandvermindernde Eigenschaften aufweisen, was bei einem Tunnelbrand, bei dem sehr hohe Temperaturen - mit einer damit einhergehenden raschen Oxidation von Aluminium - auftreten können, vorteilhaft ist.

Eine Beschichtung, die all die genannten Eigenschaften erfüllt, wäre z.B. eine mit (Polyvinylidendifluorid) welches brandhemmend und kratzfest ist. Fluorierte Polymere sind außerdem hydrophob, sodass sie besonders leicht reinigbar sind.

Die Beschichtung kann einlagig oder mehrlagig ausgebildet sein. Mit einer mehrlagigen, beispielsweise dreilagigen, Beschichtung können oft bessere Ergebnisse als mit einer gleichdicken einlagigen Beschichtung erreicht werden. Auch bei einer mehrlagigen Beschichtung ist es vorteilhaft, wenn eine oder alle Lagen ein fluoriertes Polymer, insbesondere PVDF, aufweisen.

Da die Kanten der Verbundplatte in der Regel unbeschichtet sind, hat es sich als vorteilhaft erwiesen, wenn die Kanten mit einer Kantenabdeckung versehen sind. Die Kantenabdeckung kann gleichzeitig mit den Befestigungsankern die Halterung für die Verbundplatte bilden.

Im einfachsten Fall ist die Verbundplatte plan. Aufgrund der Tunnellaibung kann es allerdings auch vorteilhaft sein, wenn die Verbundplatte dreidimensional geformt ist, um sich der Krümmung des Tunnels anzupassen.

Bevorzugt erfolgt die Montage der Verbundplatte so, dass sie mit Abstand zur Betonoberfläche befestigt wird. Dies kann z.B. über die Befestigungsanker geschehen, die z.B. Distanzelemente aufweisen. Dadurch ist eine Hinterlüftung der Auskleidung gewährleistet, was zu einer besseren Austrocknung der Betonoberfläche führt.

Nachfolgend werden anhand der Figuren und Figurenbeschreibung weitere Details und Vorteile der Erfindung gezeigt.
- Fig. 1 bis 4: zeigen vier Ausführungsbeispiele einer Verbundplatte.
- Fig. 5: zeigt den Querschnitt durch eine Hohlkammerplatte einer Verbundplatte gemäß den Ausführungsbeispielen der Fig. 1 bis 4.
- Fig. 6: zeigt eine Tunnelauskleidung einer Seitenwand mit zwei Verbundplatten samt seitlicher Befestigung.
- Fig. 7: zeigt eine Tunnelauskleidung für eine Seitenwand und die Verankerung am Fuß der Verbundplatte mit der unteren Abdeckung.
- Fig. 8: zeigt die Tunnelauskleidung der Fig. 5 und die obere Abdeckung.

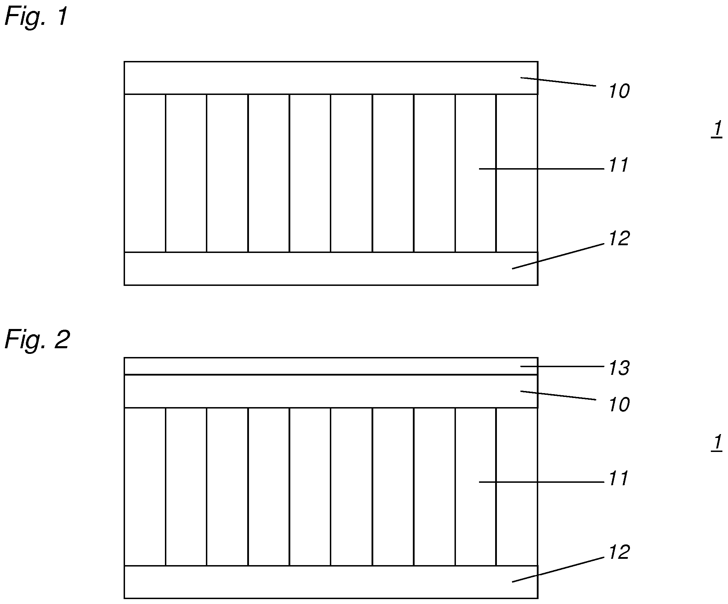

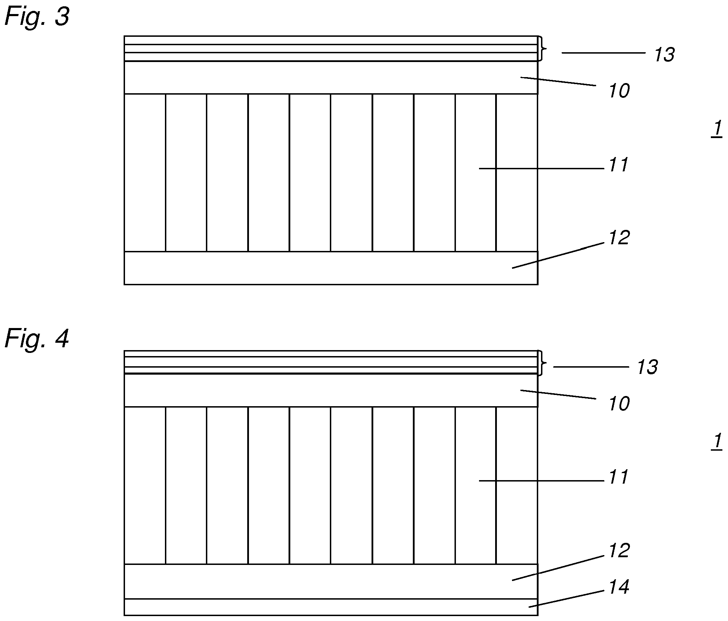

Die Fig. 1 bis 4 zeigen jeweils eine Seitenansicht einer Verbundplatte 1, mit einer oberen metallischen Decklage 10, umfassend Aluminium, einer unteren metallischen Decklage 12, umfassend Aluminium und einer dazwischen angeordneten metallischen Hohlkammerplatte 11, umfassend Aluminium. Die einzelnen Lagen 10, 11, 12 sind miteinander verklebt. In den drei Ausführungsbeispielen der Fig. 2 bis 4 ist auf der metallischen Decklage 10 noch zusätzlich eine Beschichtung 13 aufgebracht. Diese ist im Ausführungsbeispiel der Fig. 2 einlagig und in den Ausführungsbeispielen der Fig. 3 und 4 dreilagig ausgebildet. Das Ausführungsbeispiel der Fig. 4 enthält zusätzlich noch eine Beschichtung 14 auf der unteren metallischen Decklage 12.

In den gezeigten Ausführungsbeispielen der Fig. 2 bis 4 ist die obere Decklage 10 mit einer PVDF-Beschichtung versehen, die einerseits die Kratzfestigkeit erhöht, andererseits hydrophober als die metallische Decklage 10 ist. In den Beispielen der Fig. 3 und 4 weisen die einzelnen Lagen der dreilagigen Beschichtung 13 jeweils PVDF auf. Auch auf der unteren Decklage 12 könnte eine solche Beschichtung 14 vorgesehen sein (Fig. 4).

Die Oberfläche könnte außerdem z.B. in RAL wahlweise 9016, 1013 oder 1015, gehalten sein und einen Reflexionsgrad von mind. 60% aufweisen.

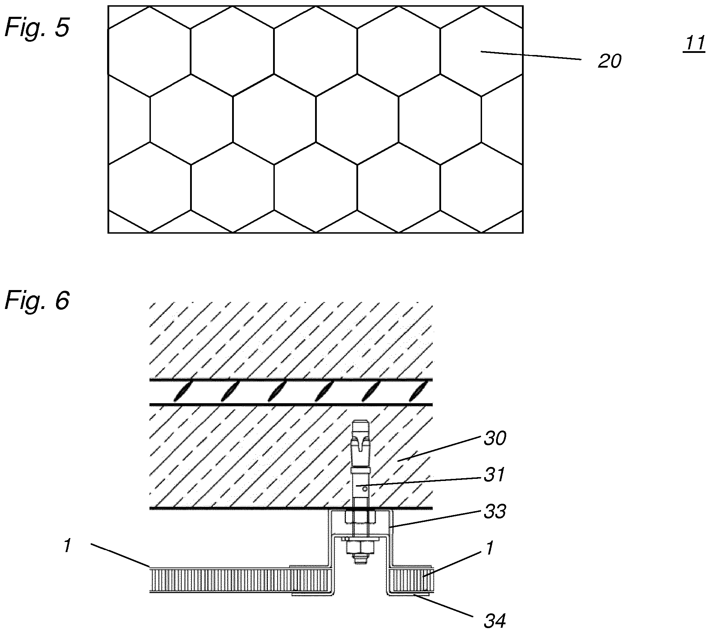

In der Fig. 5 ist der Querschnitt durch die Hohlkammerplatte 11 der Ausführungsbeispiele der Fig. 1 bis 4 gezeigt. Diese Hohlkammerplatte 11 ist als Honigwabenpaneel ausgebildet, d.h. die einzelnen Kammern 20 sind im Querschnitt als reguläres Hexagon ausgebildet und zylinderförmig.

Die obere Decklage 10 und die untere Decklage 12 bestehen aus einer Aluminiumlegierung gemäß EN AW 5754 gemäß DIN EN 573-3:2009. Die Dicke der jeweiligen Decklage 10, 12 beträgt jeweils 1 mm. Die Hohlkammerplatte 11 besteht aus einer Aluminiumlegierung gemäß EN AW 3005 gemäß DIN EN 573-3:2009 bei einer Dicke von 8 mm. Die Gesamtdicke der Verbundplatte beträgt daher 10 mm und das Flächengewicht liegt bei 6,53 kg/m². Die Verbundplatten 1 können z.B. ein Format von 4000 mm x 1250 mm aufweisen.

In Ausführungsbeispielen, in denen die Verbundplatte 1 dreidimensional geformt ist und einen Biegung aufweist, hat es sich als vorteilhaft erwiesen, wenn die obere und die untere Decklage 10, 12 aus der Aluminiumlegierung EN AW 5005 gemäß DIN EN 573-3:2009 besteht, während die Hohlkammerplatte 11 aus einer Aluminiumlegierung EN AW 3005 gemäß DIN EN 573-3:2009 besteht, da diese Materialkombination gut formbar ist.

Eine solche Verbundplatte 1 hat eine Brandbeständigkeit von mindestens A2-s1, d0 oder höher nach DIN EN 13501-1:2010-01.

In Fig. 6 ist eine Verbundplatte 1 gezeigt, die mittels eines Befestigungsankers 31 an einer Betonfläche 30 befestigt ist. Der Befestigungsanker 31 bildet mit der Halterung 33 und dem Profil 34 in Form eines Hutprofils, welches ein Klemmprofil darstellt, eine Befestigung für die Verbundplatte 1. Dabei bilden die Halterung 33 und das Hutprofil 34 zwei U-förmige Querschnitte zur Aufnahme der Verbundplatte 1. Mittels einer Schraubverbindung kann das Hutprofil 34 gegen die Halterung 33 gepresst und am Befestigungsanker 31 befestigt werden. Die gezeigte Ausführungsform dient z.B. zur seitlichen Befestigung von zwei benachbarten Verbundplatten 1.

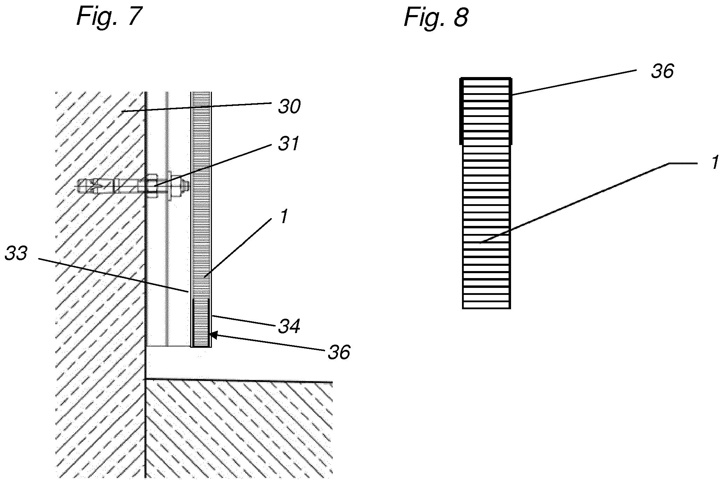

Fig. 7 zeigt eine Verbundplatte 1, die ebenfalls mittels eines Befestigungsankers 31 an einer Betonfläche 30 befestigt ist. Der Befestigungsanker 31, die Halterung 33 und das Profil 34 nehmen die Verbundplatte 1 auf. Ein C bzw. U- förmiges Profil 36 deckt die Verbundplatte 1 an der Unterseite ab bzw. bildet eine Kantenabdeckung. Das C-förmige Profil 36 kann die Verbundplatte 1 aufnehmen und mit dem Befestigungsanker 31 ist auch eine Wandmontage möglich. Weiters kann - wie in Fig. 8 dargestellt - auch an der Oberseite der Verbundplatte 1 ein C-förmiges Profil 36 vorgesehen sein, welches als Kantenabdeckung dient. Mit dem Profil 36 könnte die Verbundplatte 1 aber u.U. auch an der Halterung befestigt werden.

In den gezeigten Ausführungsbeispielen sind die Befestigungsanker 31 derart ausgebildet, dass die Verbundplatte 1 einen Abstand zur Betonoberfläche 30 aufweist. Dadurch ist die Betonauskleidung hinterlüftet. Sollte die Betonoberfläche 30 trotzdem mit Wasser in Kontakt kommen, erlaubt die Luftzirkulation durch die Hinterlüftung, dass die Betonoberfläche 30 wieder trocknet.

Gegenüber dem Stand der Technik hat die vorliegende Erfindung zahlreiche Vorteile. Die Oberfläche der Tunnelauskleidung lässt sich leichter reinigen, sie weist eine größere Helligkeit auf, sie ist kratzfest und sie schützt die Betonauskleidung des Tunnels.

Der Aspekt der leichteren Reinigbarkeit äußert sich dadurch, dass die Betonoberfläche nicht mehr mit einer Tunnelbürste gereinigt werden muss, einem sehr teueren und zeitaufwändigen Verfahren. Es reicht zum Reinigen ein einfacher Dampfdruckstrahler, mit welchem die Oberfläche abgestrahlt wird. Auch ist die Montage solcher Verbundplatten 1 aufgrund der niedrigen Dichte der Hohlkammerplatte 11 sehr einfach, da die Masse der Verbundplatte 1 gering ist. Im Falle einer Beschädigung nach einem Unfall ist ein einfacher Austausch der beschädigten Verbundplatte 1 ohne Kran möglich. Die Verbundplatte 1 unterliegt außerdem fast keiner Korrosion.

Die Möglichkeit der Oberflächengestaltung mit hellen Farben erlaubt besser ausleuchtbare Tunnel und trotz geringer Dicke der Verbundplatte ist gute Brandsicherheit gewährleistet

## Patentansprüche

1. Tunnelauskleidung, mit einer Verbundplatte (1) umfassend
(i) eine obere metallische Decklage (10), umfassend Aluminium,
(ii) eine untere metallische Decklage (12), umfassend Aluminium und
(iii) eine dazwischen angeordnete metallische Hohlkammerplatte (11), umfassend Aluminium, **dadurch gekennzeichnet, dass** die obere Decklage (10) eine hydrophobe Beschichtung mit einem fluorierten Polymer, vorzugsweise PVDF, aufweist.

2. Tunnelauskleidung nach Anspruch 1, **dadurch gekennzeichnet, dass** die Hohlkammerplatte (11) als Honigwabenpaneel ausgebildet ist.

3. Tunnelauskleidung nach Anspruch 1 oder Anspruch 2, **dadurch gekennzeichnet, dass** die hydrophobe Beschichtung mehrlagig ist.

4. Tunnelauskleidung nach Anspruch 3, **dadurch gekennzeichnet, dass** alle Lagen der mehrlagigen Beschichtung ein fluoriertes Polymer, insbesondere PVDF, aufweisen.

5. Tunnelauskleidung nach einem der Ansprüche 1 bis 4, **dadurch gekennzeichnet, dass** die untere Decklage (12) eine hydrophobe Beschichtung aufweist.

6. Tunnelauskleidung nach Anspruch 5, **dadurch gekennzeichnet, dass** die Beschichtung der unteren Decklage (12) ein fluoriertes Polymer, vorzugweise PVDF, aufweist.

7. Tunnelauskleidung nach einem der Ansprüche 1 bis 6, **dadurch gekennzeichnet, dass** die obere Decklage (10), die untere Decklage (12) und/oder die Hohlkammerplatte (11) eine Aluminiumlegierung umfassen.

8. Tunnelauskleidung nach Anspruch 7, **dadurch gekennzeichnet, dass** die Aluminiumlegierung über 90 Gew.% AI, vorzugsweise über 95 Gew.% umfassen.

9. Tunnelauskleidung, **gekennzeichnet durch** eine Verbundplatte, insbesondere wie in einem der Ansprüche 1 bis 8 definiert, und eine Befestigung für die Verbundplatte (1), welche einen Befestigungsanker (31), eine Halterung (33) und ein Hutprofil (34), welches ein Klemmprofil darstellt, umfasst, wobei die Halterung (33) und das Hutprofil (34) zwei U-förmige Querschnitte zur Aufnahme der Verbundplatte (1) bilden.

10. Verwendung einer Verbundplatte (1) wie in einem der Ansprüche 1 bis 8 definiert zur Auskleidung eines Tunnels.

11. Verfahren zur Auskleidung eines mit Beton ummantelten Tunnels, wobei mehrere Befestigungsanker (31) auf der Betonoberfläche (30) einer Tunnellaibung eingebracht und eine Verbundplatte (1) wie in einem der Ansprüche 1 bis 8 definiert an den Befestigungsankern (31) befestigt werden.

## Claims

1. A tunnel lining with a composite panel (1), comprising
(i) a top metal cover layer (10) comprising aluminum,
(ii) a bottom metal cover layer (12) comprising aluminum, and
(iii) a metal hollow chamber plate (11) comprising aluminum arranged therebetween, **characterized in that** the top cover layer (10) has a hydrophobic coating with a fluorinated polymer, preferably PVDF.

2. The tunnel lining according to claim 1, **characterized in that** the hollow chamber plate (11) is formed as a honeycomb panel.

3. The tunnel lining according to claim 1 or claim 2, **characterized in that** the hydrophobic coating is multilayered.

4. The tunnel lining according to claim 3, **characterized in that** all layers of the multilayered coating have a fluorinated polymer, in particular PVDF.

5. The tunnel lining according to any one of the claims 1 to 4, **characterized in that** the bottom cover layer (12) has a hydrophobic coating.

6. The tunnel lining according to claim 5, **characterized in that** the coating of the bottom cover layer (12) has a fluorinated polymer, preferably PVDF.

7. The tunnel lining according to any one of the claims 1 to 6, **characterized in that** the top cover layer (10), the bottom cover layer (12) and/or the hollow chamber plate (11) comprise an aluminum alloy.

8. The tunnel lining according to claim 7, **characterized in that** the aluminum alloy comprises more than 90 % by weight, preferably more than 95 % by weight, of Al.

9. A tunnel lining, **characterized by** a composite panel, in particular as defined in any one of the claims 1 to 8, and a mount for the composite panel (1), the mount comprising a mounting anchor (31), a support (33), and a hat profile (34) representing a clamp profile, the support (33) and the hat profile (34) forming two U-shaped cross-sections for receiving the composite panel (1).

10. Use of a composite panel (1) as defined in any one of the claims 1 to 8 for lining a tunnel.

11. A method for lining a tunnel encased with concrete, wherein several mounting anchors (31) are introduced to the concrete surface (30) of a tunnel soffit and a composite panel (1) as defined in any one of the claims 1 to 8 is mounted on the mounting anchors (31).

## Revendications

1. Revêtement de tunnel avec un panneau composite (1) comprenant
(i) une couche métallique supérieure (10) contenant de l'aluminium,
(ii) une couche métallique inférieure (12) contenant de l'aluminium et
(iii) une plaque alvéolaire (11) contenant de l'aluminium disposée entre elles, **caractérisé en ce que** la couche supérieure (10) comporte un revêtement hydrophobe avec un polymère fluoré, de préférence du PVDF.

2. Revêtement de tunnel selon la revendication 1, **caractérisé en ce que** la plaque alvéolaire (11) est configurée comme un panneau en nid d'abeille.

3. Revêtement de tunnel selon la revendication 1 ou 2, **caractérisé en ce que** le revêtement hydrophobe est multicouche.

4. Revêtement de tunnel selon la revendication 3, **caractérisé en ce que** toutes les couches du revêtement multicouche contiennent un polymère fluoré, en particulier du PVDF.

5. Revêtement de tunnel selon une des revendications 1 à 4, **caractérisé en ce que** la couche inférieure (12) comporte un revêtement hydrophobe.

6. Revêtement de tunnel selon la revendication 5, **caractérisé en ce que** la couche supérieure (12) contient un polymère fluoré, de préférence du PVDF.

7. Revêtement de tunnel selon une des revendications 1 à 6, **caractérisé en ce que** la couche supérieure (10), la couche inférieure (12) et/ou la plaque alvéolaire (11) contiennent un alliage d'aluminium.

8. Revêtement de tunnel selon la revendication 7, **caractérisé en ce que** l'alliage d'aluminium comprend plus de 90% d'aluminium en poids, de préférence plus de 95% d'aluminium en poids.

9. Revêtement de tunnel **caractérisé par** un panneau composite, en particulier tel qu'il est défini dans une des revendications 1 à 8, et une fixation pour le panneau composite (1), laquelle comprend une ancre de fixation (31), un support (33) et un profilé à chapeau (34) qui constitue un profilé de serrage, le support (33) et le profilé à chapeau (34) formant deux sections en forme de U pour recevoir le panneau composite (1).

10. Utilisation d'un panneau composite (1) tel qu'il est défini dans une des revendications 1 à 8 pour le revêtement d'un tunnel.

11. Procédé pour le revêtement d'un tunnel enrobé de béton, selon lequel plusieurs ancres de fixation (31) sont insérées sur la surface en béton (30) d'une paroi de tunnel et un panneau composite (1) tel qu'il est défini dans une des revendications 1 à 8 fixé sur les ancres de fixation (31).
